# EUROPEAN PATENT APPLICATION

(11) **EP 1 477 065 A1**
(43) Date of publication of application: **17.11.2004**
(21) Application number: 03076450.0
(22) Date of filing: 14.05.2003
(51) Int. Cl.: A21C 9/08, A21D 6/00, A21D 10/02, A21D 13/00, A21D 8/02

(54) **A method of preparing proved dough pieces and products obtainable therefrom**

(71) Applicant: CSM Nederland B.V., 1112 XE Diemen (NL)
(72) Inventor: Moret, Pieter, Hawarden, CH5 3TY (GB); Havard, Jean-Francois, 72190 Sarge-Les-Le Mans (FR); Montfort, Pierre-Louis, 78490 Montfort l'Armaury (FR); Chappel, Norman Victor, Great Sutton, Chesire CH66 2GL (GB)
(74) Representative: Jorritsma, Ruurd

(57) **Abstract**

The present invention relates to a method of preparing a proved dough piece comprising:
mixing water with flour, leavening agent and optionally other ingredients to form a dough;
laminating the dough by:
   ■ flattening the dough into a sheet,
   ■ dusting the surface of the dough with a particulate edible material,
   ■ folding the flattened dough, each fold being perpendicular or parallel to the other fold,
   ■ flattening the laminated dough again into a sheet,
   ■ repeating steps b. to d. for at least one more time;
dividing the laminated dough into a plurality of pieces by cutting the dough in a direction largely perpendicular to the orientation of the dough layers;
positioning the pieces of laminated dough so that the dough layers are oriented largely vertically; and
proving the pieces of laminated dough while maintaining the largely vertical orientation of the dough layers.

The invention also concerns products obtainable by said method and the use of a laminated dough in the preparation of such products.

## Description

### TECHNICAL FIELD OF THE INVENTION

The present invention relates to a method of preparing proved dough pieces, which method comprises the steps of preparing a dough, laminating said dough, dividing the dough in a plurality of dough pieces and proving the laminated dough pieces. The present method is particularly suitable for preparing bread dough pieces.

Other aspects of the invention are concerned with the use of a non-proved or partially proved laminated dough piece in a method of preparing a proved dough piece and with a packaged non-proved or partially proved laminated dough.

### BACKGROUND OF THE INVENTION

Methods for preparing dough that make use of lamination and proving are well-known in the art. Typical examples of such methods include the preparation of croissant dough and puff pastry dough. A common element in the preparation of such a laminated dough is the use of the repeated steps of applying butter or margarine or shortening onto the surface of a flattened sheet of dough followed by folding and rolling. After lamination, the dough is usually cut and subjected to a proving step. The cut dough is either proven in the same orientation in which it was obtained from the lamination process or it is rolled or folded prior to such proving.

US 4,604,289 (Spanier et al.) describes a process for preparing a whole wheat bread from a proved laminated dough. Unlike the aforementioned dough preparation processes, no margarine or shortening is employed during the preparation process. The laminated dough is rolled into a cylindrical form and allowed to rise prior to baking.

### SUMMARY OF THE INVENTION

The present inventors have developed a novel process for the preparation of proved laminated dough pieces. The method according to the invention is characterised in that, during the lamination process, it employs a particulate edible material that is repeatedly dusted onto the sheet of dough before folding and flattening. Another essential element of the present method resides in the feature that the laminated dough is cut into pieces, which pieces are proved while maintaining the dough layers in a largely vertical orientation.

The present method offers the advantage that baking of the proved laminated dough produces a product that exhibits an appealing appearance and a pleasant texture. Furthermore the present method enables the production of such a product in a controlled and consistent fashion. The present dough may suitably be frozen and can be marketed in a packaged frozen form. The invention also relates to the baked or parbaked bakery product that is obtained by baking or parbaking the present proved laminated dough.

### DETAILED DESCRIPTION OF THE INVENTION

Accordingly, one aspect of the present invention is concerned with a method of preparing a proved dough piece comprising:
mixing water with flour, leavening agent and optionally other ingredients to form a dough; laminating the dough by:
   a. flattening the dough into a sheet,
   b. dusting the surface of the dough with a particulate edible material,
   c. folding the flattened dough, each fold being perpendicular or parallel to the other fold,
   d. flattening the laminated dough again into a sheet,
   e. repeating steps b. to d. for at least one more time;
   dividing the laminated dough into a plurality of pieces by cutting the dough in a direction largely perpendicular to the orientation of the dough layers;
   positioning the pieces of laminated dough so that the dough layers are oriented largely vertically; and
   proving the pieces of laminated dough while maintaining the largely vertical orientation of the dough layers.
   The term "dusting" refers to the application of a relatively small amount of particulate material onto the surface of the dough. Typically, the particulate material is evenly distributed across the surface of the dough, e.g. by sprinkling. It is strongly preferred not to apply a fat product, such as margarine or shortening, during the lamination process.
   In principle any particulate edible material may be used in the present method. Best results are obtained when the particulate edible material consists of relatively small particles. Consequently, in a preferred embodiment, the mean particle size of the particulate material is less than 600 µm, more preferably said mean particle size is less than 400µm, even more preferably less than 300 µm and most preferably less than 200 µm.
   The particulate edible material used in the present method preferably consists of one or more bakery materials. More preferably the particulate material is selected from the group consisting of flour, bread crumbs, salt, starch, gluten, flavourings and combinations thereof. More preferably, the particulate material is selected from the group consisting of flour, gluten, flavourings and combinations thereof. Most preferably, the particulate edible material is flour. Here the term "starch" also encompasses starch derivatives such as chemically modified starches and hydrolysed starches.
   In order to obtain a dough that will produce a baked product with the desired appearance and texture, it is preferred to apply the particulate edible material in the dough in an amount within the range of 0.001 and 1 wt.%, more preferably in an amount within the range of 0.01 and 0.5 wt.%.
   The application of the particulate edible material in the present dough results in the formation of dough layers that are separated by thin layers of said particulate material. These layers of particulate edible material to a certain extent prevent cohesion of the dough layers. Although it is an essential element of the present invention that the layers of particulate material prevent cohesion of the dough layers, it is preferred that there is sufficient cohesion between the dough layers to prevent delamination during proving.
   In order to achieve a significant impact on appearance and texture, lamination is preferably carried out in such a fashion that a multi-layered dough is obtained. Preferably, the pieces obtained in the present method comprise at least 8, more preferably at least 16 and most preferably at least 32 layers of dough.
   The present method yields a plurality of pieces of laminated dough. Typically, from a single laminated sheet at least 8 pieces, more preferably at 16 dough pieces are cut in the present method. The cutting operation may suitably be performed in any manner known in the art.
   In the present method, prior to proving, the dough pieces may suitably be subjected to some form of shaping, provided said shaping operation does not significantly affect the largely parallel orientation of the dough layers. Thus, the present invention does not encompass a method in which the laminated dough pieces are rolled into a cylinder-like form or in which substantial parts of the dough are bent into a different orientation, e.g. to create a pastry cup.
   Unlike most methods known from the prior art, the present method produces cut pieces of dough that, prior to any repositioning, are relatively thick. It will be understood that a relatively high thickness facilitates the operation of turning the pieces onto their side. Thus, in a preferred embodiment, the laminated dough is cut into a plurality of dough strips exhibiting a height to breadth ratio prior to proving within the range of 1:2 and 2:1. Preferably, also the proved dough exhibits these dimensions. Furthermore, the proved laminated dough strips are preferably at least twice as long, more preferably thrice as long as the maximum cross-sectional diameter.
   The benefits of the present method are particularly pronounced in bread dough, especially in bread dough that contains relatively low amounts of fat. Consequently, the present dough preferably contains less than 5%, more preferably less than 3% fat by weight of flour.
   The dough obtained by the present method may suitably be baked immediately or shortly after completion of the proving step. Alternatively, the proved dough may be frozen using any freezing techniques known in the art.
   Thus, another aspect of the invention relates to a method of preparing a frozen proved dough, said method comprising freezing the present proved laminated dough. Yet another aspect of the invention is concerned with a frozen dough obtainable by such a method. Freezing and packaging of the frozen dough offers the advantage that the frozen dough may be stored until the moment of use. The frozen dough that can be obtained by the present method will retain its favourable properties even when stored in frozen form for several weeks or even months.
   Further aspects of the present invention relate to a method of preparing a baked or parbaked bakery product comprising baking or parbaking the proved dough according to the present invention while maintaining a largely vertical orientation of the dough layers and to the baked or parbaked bakery product that can be obtained by such a method. It is an essential element of this particular embodiment of the invention that the proved dough is baked while maintaining a largely vertical orientation of the dough layers. Thus, the favourable effect of the present method on the appearance of the product will be most pronounced. In a particularly preferred embodiment, during baking the product is turned upside down in comparison to its orientation during proving as this was found to yield a particularly attractive appearance.
   The impact of the present method, particularly in the form of delamination, on the appearance of the product preferably becomes manifest primarily in the exterior of the baked product. Thus, in a preferred embodiment, the interior of the proved dough is essentially resistant to delamination during the baking, but the exterior surface of the proved dough exhibits some delamination during said baking. In an especially preferred embodiment of the invention the crust of the baked or parbaked bakery product exhibits cracks that were formed during the baking as a result of delamination. Bread products with a cracked crust are known in the art. The present method, however, offers the advantage that such cracks are formed in a very controlled and reproducible manner. Also, in the present method it is not necessary to make incisions into the dough to induce the formation of cracks along these incisions.
   The present invention also encompasses the use of non-proved or partially proved laminated dough pieces containing separating layers of particulate edible material in the preparation of a proved laminated dough or baked product as defined above. Indeed, the benefits of the present invention may also be realised by providing such non-proved or partially proved laminated dough pieces, in frozen or non-frozen form, together with instructions to prove such dough pieces in accordance with the method of the present invention.
   Thus, another aspect of the invention relates to the use of a non-proved or partially proved laminated dough pieces, comprising a plurality of dough layers separated by layers of particulate edible material, in a method of preparing a proved dough, said method comprising the steps of positioning the pieces of non-proved or partially proved laminated dough so that the dough layers are oriented largely vertically; and proving the pieces of laminated dough while maintaining the largely vertical orientation of the dough layers. In a particularly preferred embodiment of the invention a non-proved laminated dough is used.
   Yet another aspect of the invention relates to a packaged food product comprising: a frozen non-proved or partially proved laminated dough piece, comprising a plurality of dough layers separated by layers of particulate edible material; and a packaging material enveloping said dough piece, wherein the packaging material carries instructions for the user to prove the dough piece by positioning the piece of laminated dough so that the dough layers are oriented largely vertically and proving the piece of laminated dough while maintaining the largely vertical orientation of the dough layers.

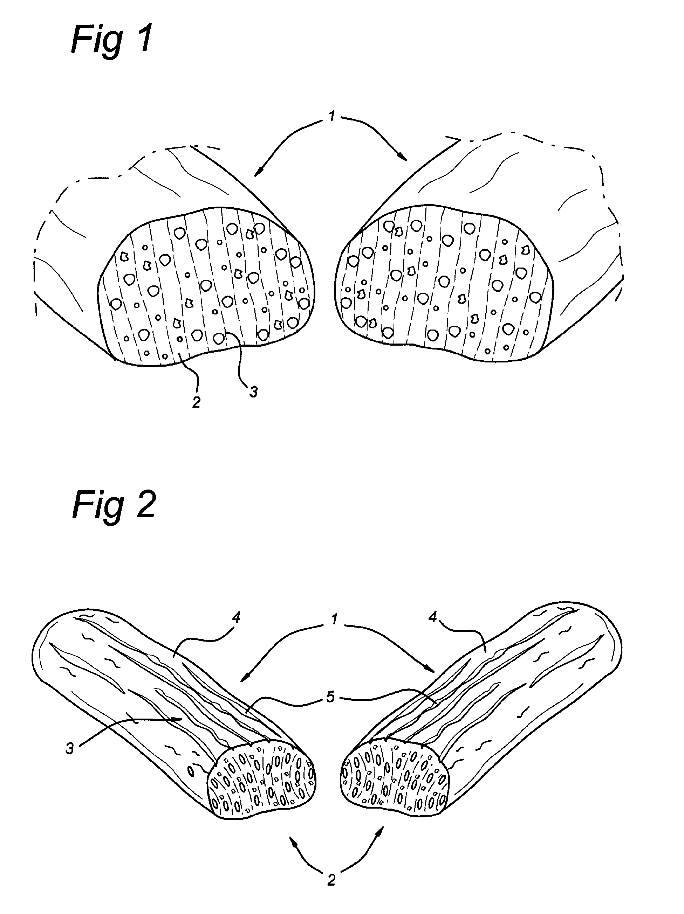

In the attached figures a schematic representation is provided of a proved laminated dough according to the invention (figure 1) and a baked product obtained from such a dough (figure 2).

Figure 1 depicts a strip of proved laminated bread dough 1 that is obtained after proving a laminated dough according to the present invention while maintaining a largely vertical orientation of the dough layers 2. Figure 1 also shows the layers of edible particulate material 3 that separate the dough layers. It is evident from the representation that during the proving process the original rectangular shape of the dough piece has changed into a more rounded shape. Furthermore it can be seen that the dough layers have slightly bent outwards at the top and bottom of the dough piece.

Figure 2 shows a baked bread 1 that was obtained after baking the dough piece depicted in figure 1 and that has been cut in two to reveal the interior crumb 2 of the baked bread 1. It is evident from figure 2 that the crumb 2 of the baked bread, although showing some signs of lamination 3, is coherent in much the same way as ordinary bread. The crust of the bread 4 exhibits cracks 5 that largely coincide in terms of orientation and origin with the layers of edible particulate material in the original dough. These cracks are an appealing feature of the bread.

The invention is further illustrated by means of the following examples.

### EXAMPLES

### Example 1

Deep frozen, proved laminated dough pieces were prepared as follows:

| Dough composition (parts of weight): | |
|---|---|
| Flour | 100 |
| Yeast | 4.8 |
| Bread improver | 5.0 |
| Water | 57 |
| Flavour (Hybake 320, ex Quest International) | 5.0 |

i. Flour (type English wheat blend /10 - 12% protein levels), water (temperature approx. 10°C to 15°C depending on the temperature of the flour) and a yeast that is tolerant to freezing conditions were combined.
ii. The dough was mixed on a spiral mixer for 2 minutes at slow and for 6 to 8 minutes at fast speed. The aim is to achieve a target dough temperature of 16°C to 18°C.
iii. The dough was allowed 10 minutes of resting time prior to further processing.
iv. The dough was sheeted out to an initial width of approximately 300mm x 100mm depth; dough weight about 5kg. A small dusting of flour was applied at this point (0.01-0.05 wt.%) to help with the stretching of the dough piece and also contributes to the layering effect.
v. The depth of the dough was further reduced by passing it through a sequence of rollers to approximately 800mm x 30mm prior to the formation of the first set of layers (total of 6). Again at the point prior to the layering a small amount dusting of the flour was applied to the surface (0.01-0.05 wt.%). This dusting flour is to help the finished appearance of the characteristic splitting on the surface.
vi. After the first layering the dough was slightly flattened down by rolling to approximately (w x d) 700mm x 100mm. Subsequently, within 5 minutes, the dough was further flattened through a set of reducing rollers to a width and depth of 900mm x 30mm. A second set of layering (6 layers) was employed after applying a small dusting of flour to the surface (0.01-0.05 wt.%).
vii. After the layering and a slight reduction by rolling the dough sheet exhibited a width and depth of 700mm x 100mm
viii. The dough piece, exhibiting 36 dough layers, was rested for 5 minutes.
ix. Subsequently, the dough was reduced down to a 70mm thickness and to a finished width of 570mm by passing it through a sequence of rollers provided with flour dusting stations to aid in the processing of the dough (dose level 0.01-0.05 wt.%) followed by trimming. The sheet of dough was guillotined into strips of 25mm width and 570mm length.
x. The cut dough pieces were turned 90° (around the longitudinal axis) to obtain dough strips of 25mm depth x 70mm width x 570mm long.
xi. The raw dough was placed into a prover where it remained for 40 minutes at a temperature of 28°C and a relative humidity of 92% to 95%
xii. After the proving process was completed the pre proved dough piece was blast frozen for 40 minutes at -30° to -34°C.

Breads with a crust and crumb structure as depicted in the drawings were obtained by baking the frozen dough pieces, after thawing. Five dough pieces were baked on a standard baking tray (30 cm x 18 cm). The dough pieces were turned 180° around the longitudinal axis vis-à-vis the position in which they were proved. The oven temperature was 200°C and total baking time was 25 minutes. At the beginning of the baking process steam was injected into the oven for approximately 8 seconds (about 0.6 litre). After 10 minutes the oven dampers were opened to release the steam.

### Example 2

Deep frozen, proved laminated dough pieces were prepared as follows using the same dough composition as described in Example 1:
i. Flour (type English wheat blend /10 ― 12% protein levels), water (temperature approx. 10°C to 15°C depending on the temperature of the flour) and a yeast that is tolerant to freezing conditions were combined.
ii. The dough was mixed on a spiral mixer for 2 minutes at slow and for 6 to 8 minutes at fast speed. The aim is to achieve a target dough temperature of 16°C to 18°C.
iii. The dough was allowed 10 minutes of resting time prior to further processing.
iv. The dough was sheeted out to an initial width of approximately 300mm x 100mm depth; dough weight about 5kg. A small dusting of flour was applied at this point (0.01-0.05 wt.%) to help with the stretching of the dough piece and also contributes to the layering effect.
v. The depth of the dough was further reduced by passing it through a sequence of rollers to approximately 800mm x 30mm prior to the formation of the first set of layers (total of 8). Again at the point prior to the layering a small amount dusting of the flour was applied to the surface (0.01-0.05 wt.%). This dusting flour is to help the finished appearance of the characteristic splitting on the surface.
vi. After the first layering the dough was slightly flattened down by rolling to approximately (w x d) 700mm x 100mm. Subsequently, within 5 minutes, the dough was further flattened through a set of reducing rollers to a width and depth of 900mm x 30mm. A second set of layering (8 layers) was employed after applying a small dusting of flour to the surface (0.01-0.05 wt.%).
vii. After the layering and a slight reduction by rolling the dough sheet exhibited a width and depth of 700mm x 100mm
viii. The dough piece, exhibiting 64 dough layers, was rested for 5 minutes.
ix. Subsequently, the dough was reduced down to a 70mm thickness and to a finished width of 570mm by passing it through a sequence of rollers provided with flour dusting stations to aid in the processing of the dough (dose level 0.01-0.05 wt.%) followed by trimming.
x. The sheet of dough was guillotined into strips of 25mm width and 570mm length. The strips so obtained were cut in half to yield pieces of about 290 mm length.
xi. The cut dough pieces were turned 90° (around the longitudinal axis) to obtain dough strips of 25mm depth x 70mm width x 290mm long.
xii. The raw dough was placed into a prover where it remained for 40 minutes at a temperature of 28°C and a relative humidity of 92% to 95%
xiii. After the proving process was completed the pre proved dough piece was blast frozen for 40 minutes at -30° to -34°C.

Rolls with a crust and crumb structure as depicted in the drawings were obtained by baking the frozen dough pieces under the conditions described in Example 1.

## Claims

1. A method of preparing proved dough pieces comprising:
mixing water with flour, leavening agent and optionally other ingredients to form a dough; laminating the dough by:
a. flattening the dough into a sheet,
b. dusting the surface of the dough with a particulate edible material,
c. folding the flattened dough, each fold being perpendicular or parallel to the other fold,
d. flattening the laminated dough again into a sheet,
e. repeating steps b. to d. for at least one more time;
dividing the laminated dough into a plurality of pieces by cutting the dough in a direction largely perpendicular to the orientation of the dough layers;
positioning the pieces of laminated dough so that the dough layers are oriented largely vertically; and
proving the pieces of laminated dough while maintaining the largely vertical orientation of the dough layers.

2. Method according to claim 1, wherein the particulate edible material is selected from the group consisting of flour, bread crumbs, salt, starch, gluten, flavourings and combinations thereof.

3. Method according to claim 1 or 2, wherein the particulate edible material is flour.

4. Method according to any one of the preceding claims, wherein the amount of particulate edible material applied in the dough is between 0.001 and 1 wt.%, preferably between 0.01 and 0.5 wt.%.

5. Method according to any one of the preceding claims, wherein the pieces comprise at least 8, preferably at least 16 layers of dough.

6. Method according to any one of the preceding claims, wherein the dough contains less than 5%, preferably less than 3% fat by weight of flour.

7. A method of preparing frozen proved dough pieces, said method comprising freezing proved dough pieces according to any one of claims 1-6.

8. A frozen proved dough piece obtainable by the method according to claim 7.

9. A method of preparing a baked or parbaked bakery product comprising baking or parbaking a proved dough piece obtained by the method according to any one of claims 1-7 or a frozen proved dough piece according to claim 8, while maintaining a largely vertical orientation of the dough layers.

10. Baked or parbaked bakery product obtainable by the method according to claim 9.

11. Use of a non-proved or partially proved laminated dough piece, comprising a plurality of dough layers separated by layers of particulate edible material, in a method of preparing a proved laminated dough piece, said method comprising:
positioning the piece of non-proved or partially proved laminated dough so that the dough layers are oriented largely vertically; and
proving the piece of laminated dough while maintaining the largely vertical orientation of the dough layers.

12. A packaged food product comprising:
a. a frozen non-proved or partially proved laminated dough piece, comprising a plurality of dough layers separated by layers of particulate edible material; and
b. a packaging material enveloping said dough piece,
wherein the packaging material carries instructions for the user to prove the dough piece by positioning the piece of laminated dough so that the dough layers are oriented largely vertically and proving the piece of laminated dough while maintaining the largely vertical orientation of the dough layers.
